# EUROPÄISCHE PATENTANMELDUNG

(11) **EP 1 849 554 A1**
(43) Veröffentlichungstag der Anmeldung: **31.10.2007**
(21) Anmeldenummer: 07106680.7
(22) Anmeldetag: 23.04.2007
(51) Int. Cl.: B23K 35/14, B23K 35/02, B32B 15/04

(54) **Hartmetallverschleißschutzschichten für weiche und nicht aushärtbare Metalle**

(30) Priorität: 29.04.2006 DE 102006020101
(71) Anmelder: DLR Deutsches Zentrum für Luft- und Raumfahrt e.V., 51147 Köln (DE); Kreyer, Norbert, 56651 Niederzissen (DE)
(72) Erfinder: Hüppen, Gerd, 53797 Lohmar (DE); Weber, Klaus, 53721 Siegburg (DE); Kreyer, Norbert, 56651 Niederzissen (DE)
(74) Vertreter: Jönsson, Hans-Peter

(57) **Zusammenfassung**

Die Erfindung betrifft einen Schichtaufbau zur Verwendung als Lagermaterial, insbesondere für Gleitlager, Pleuellager, Wälzlager oder Kugellager. Der Schichtaufbau umfasst ein metallisches Substrat, eine Lotschicht auf Kupfer, Silber oder Aluminiumbasis mit einer Schichtdicke von 0,5 bis 500 μm, und eine Hartstoffschicht, insbesondere Wolframcarbid mit einer bevorzugten Schichtdicke von 0,1 bis 1 mm.
Weiterhin kann eine Gleitschicht aus CrN, TiB2, MoS2, TiBN sowie deren Mischungen oder Mischung mit DLC (diamond like carbon) aufgebracht werden. Der Schichtaufbau wird durch Aufbringen einer Lötfolie oder Pressen einer Lotpulver / Hartstoffmischung und anschließender Wärmebehandlung bei 600-100°C hergestellt. Der Schichtaufbau bietet gute Gleit- und Verschleißschutzeigenschaften bei guter Haftung und Verformungsfestigkeit, ohne dass das Substrat vor der Beschichtung geschliffen werden muß.

## Beschreibung

Die Erfindung betrifft einen Schichtaufbau umfassend ein Substrat mit einer Lotschicht und einer Hartstoffschicht sowie ein Verfahren zu dessen Herstellung und dessen Verwendung.

Insbesondere im Fahrzeugbau müssen besondere bewegliche Teile im Motor vor allem leicht und mechanisch stabil sein. Viele dieser Teile müssen jedoch auch hervorragende Gleiteigenschaften aufweisen und besonders verschleißfest sein.

Es ist bekannt, dass beispielsweise diamantähnliche Schichten (DLC = "diamond like carbon") besonders gute Reibpartner für Stähle sind, die gerade im Fahrzeugbau oft als Werkstoff eingesetzt werden. Auch ist es bekannt, Titan als Material für beweglich leichte Teile gerade im Motorenbau einzusetzen. Trägt man jedoch die bereits bekannten DLC-Schichten direkt auf Titan auf, um so beispielsweise die Gleiteigenschaften des Bauteils oder die Verschleißeigenschaften des Bauteils zu optimieren, platzt die DLC-Schicht leicht von dem Titansubstrat ab.

Weiterhin ist es bekannt, beispielsweise auf Substraten aus Nickel oder Titan Hartstoffe wie Hartmetalle direkt aufzutragen. Ein solcher Schichtaufbau ist beispielsweise offenbart in der DE 41 02 495 A1. Um eine gute Anbindung an das Substrat zu erhalten, muss in dem offenbarten Verfahren die Hartstoffschicht durch "Laser-Dispergieren" direkt auf dem Substrat erzeugt werden.

DE 10 2004 052 135 A1 offenbart eine zusätzliche Verschleißschutzschicht aus Aluminiumoxid auf einem Hartmetallsubstrat.

DE 601 07 840 T2 beschreibt eine Klinge aus einer Basisplatte, auf der eine Zwischenschicht mit einer Dicke von 5 bis 100 nm vorgesehen sein kann, auf der wiederum eine Endüberzugsschicht vorgesehen sein kann. Bei diesem Messer wird die Basisplatte zunächst geschliffen, um dann die Zwischenschicht aufzutragen. Um eine ausreichende Haftung erzielen zu können, wird in der Endüberzugsschicht ein bestimmter Konzentrationsgradient eingestellt.

Um weiche Metalle als Reibpartner für Substrate benutzen zu können, reicht es oft nicht aus, die Oberflächen mit einer einfachen Schicht zu versehen.

Die Aufgabe der vorliegenden Erfindung ist es deshalb, das Substrat so zu gestalten, dass eine Beschichtung aus einem Hartstoff gleichzeitig Gleit- und Verschleißschutzeigenschaften aufweist, dennoch gut am Substrat haftet und nicht deformiert wird. Weiterhin ist auch Aufgabe der vorliegenden Erfindung, einen Schichtaufbau mit einem Substrat zur Verfügung zu stellen, bei dem in der Hartstoffschicht kein Gradient notwendig ist, um eine gute Haftung zu erzielen, bei dem das Substrat nicht geschliffen werden muss, sondern Unebenheiten ausgeglichen werden können, der gute Gleiteigenschaften mit Reibpartnern aufweist, der nicht von Substraten, wie beispielsweise von Titan leicht abplatzt und der dennoch als Schichtverbund nicht zu weich ausfällt.

Die der Erfindung zugrundeliegende Aufgabe wird gelöst in einer ersten Ausführungsform durch einen Schichtaufbau, umfassend ein Substrat mit einer wenigstens einseitig darauf befindlichen Lotschicht und auf der Lotschicht befindlichen Hartstoffschicht, der dadurch gekennzeichnet ist, dass die Lotschicht eine Schichtdicke in einem Bereich von 0,5 bis 500 µm aufweist.

Die Lotschicht im erfindungsgemäßen Schichtaufbau hat die Aufgabe, eine besonders gute Haftung zwischen der Hartstoffschicht und dem Substrat zu erzielen. Ist die Schichtdicke der Lotschicht zu gering, so besteht die Gefahr, dass sie von den beiden benachbarten Schichten teilweise aufgenommen wird. Darüber hinaus muss bei einer zu dünnen Lotschicht das Substrat zuvor geschliffen werden, während bei erfindungsgemäßer Schichtdicke der Lotschicht Unebenheiten des Substrats oder auch der Kontaktseite der Hartstoffschicht ausgeglichen werden können. Bedingt durch die erfindungsgemäße Schichtdicke der Lotschicht von wenigstens 0,5 µm ist es nicht mehr notwendig, die Hartstoffschicht mit einem Gradienten zu versehen, um eine ausreichende Haftung zu erzielen. Die erfindungsgemäße Mindestschichtdicke stellt außerdem sicher, dass die Hartstoffschicht nicht von dem Substrat abplatzt. Ist die Schichtdicke zu groß, so kann die Lotschicht je nach Material durch ihre Weichheit zu einem sogenannten "Eisscholleneffekt" führen, bei dem die Hartstoffschicht gegenüber dem Substrat entweder verschoben wird oder die Hartstoffschicht brüchig werden kann und eingedrückt werden kann. Die Lotschicht hat vorteilhafterweise eine Schichtdicke in einem Bereich von 5 bis 400 µm, insbesondere in einem Bereich von 100 bis 200 µm.

Der erfindungsgemäße Schichtaufbau ermöglicht es, auch relativ weiche Metalle, wie Titan, Aluminium oder auch Kupfer oder auch Legierungen, wie Bronze und Messing, die prinzipiell nicht aushärtbar sind, mit harten Oberflächen zu versehen.

Das Substrat enthält vorzugsweise überwiegend Metalle wie Titan, Kupfer oder auch Aluminium, oder Legierungen wie Messing, Bronze oder Aluminiumlegierungen, insbesondere Titanaluminiumlegierungen. Ganz besonders bevorzugt besteht das Substrat allein aus diesen Materialien.

Die Lotschicht enthält überwiegend vorteilhafterweise ein Material ausgewählt aus der Gruppe Kupfer, Silber oder Aluminium oder Mischungen sowie Legierungen derselben. Ganz besonders bevorzugt besteht die Lotschicht aus einem dieser Materialien.

Vorzugsweise liegt die Schichtdicke der Hartstoffschicht in einem Bereich von 0,1 bis 5 mm, insbesondere bevorzugt in einem Bereich von 1,5 bis 5 mm. Unabhängig kann es auch besonders bevorzugt sein, dass die Schichtdicke der Hartstoffschicht in einem Bereich von 0,1 bis 1 mm liegt.

Die Hartstoffschicht enthält vorzugsweise überwiegend Hartmetall. Besonders bevorzugt besteht die Hartstoffschicht aus Hartmetall.

Hartmetall im Sinne der Erfindung ist ein Verbundwerkstoff aus Carbiden, Nitriden oder Boriden und einer vergleichsweise niedrigschmelzenden Matrix eines Elements der Eisengruppe, die gesintert sind. Vorteilhafterweise enthält das erfindungsgemäße Hartmetall überwiegend Carbide. Hierbei kann es sich beispielsweise um Wolframcarbid, Tantalcarbid oder Titancarbid handeln. Vorteilhafterweise enthält die Hartstoffschicht Wolframcarbid, insbesondere in einer Menge von 70 bis 95 Gew.-%. Das Hartmetall besteht darüber hinaus vorteilhafterweise und gegebenenfalls Nickel.

Vorteilhafterweise umfasst der erfindungsgemäße Schichtaufbau auf der Hartstoffschicht eine Gleitschicht, die insbesondere eine Schichtdicke im Bereich von 0,5 bis 100 µm, insbesondere im Bereich 2 bis 5 µm aufweist. Durch die im Vergleich zu bekannten DLC-Schichten hohe Schichtdicke kann gerade bei Anwendungen in Gleitlagern trotz Materialabtrag in der Einlaufphase eine glatte und geschlossene Gleitschicht auch im Dauerbetrieb gewährleistet werden.

Die Gleitschicht enthält vorzugsweise überwiegend ein Material ausgewählt aus der Gruppe CrN, TiB₂, MoS₂, TiBN, deren Mischungen oder deren Mischungen mit DLC. Das Material der Gleitschicht kann auch DLC selbst sein. Besonders bevorzugt besteht die Gleitschicht aus einem dieser Materialien. Vorteilhafterweise wird das Material der Gleitschicht abhängig vom Reibpartner bestimmt. Ist der Reibpartner beispielsweise Messing oder Bronze, so ist die Gleitschicht vorzugsweise aus Chromnitrid. Ist der Reibpartner aus Aluminium, so ist die Gleitschicht vorteilhafterweise aus Titandiborid. Ist der Reibpartner aus einem Stahl, so besteht die Gleitschicht vorteilhafterweise aus DLC (diamantähnliche Schicht). Ist der Reibpartner ein gehärtetes Material, so kann vorteilhafterweise auch Titanbornitrid als Material für die Gleitschicht eingesetzt werden. Darüber hinaus ist gerade auch wegen der guten Gleiteigenschaften auch Molybdändisulfid als Material für die Gleitschicht vorteilhaft. Damit die Gleitschicht nicht von dem Substratmaterial abplatzt, wie dies bei den bekannten Schichten der Fall ist, dient aufgelötetes Hartmetall als idealer Untergrund, um solche Gleitschichten für vergleichsweise weiche Materialien, wie Aluminium oder Titan des Substrats zu nutzen. Besonders bevorzugt ist der gesamte Formkörper des erfindungsgemäßen Schichtaufbaus mit einer DLC-Schicht versehen.

Liegt die Schichtdicke der Gleitschicht oberhalb von 100 µm, so kann es zu Ablösungserscheinungen kommen und es kann eine Aufrauung der Schichten eintreten.

Die Rauhigkeit beziehungsweise Oberflächengüte Rₐ der Hartmetalloberfläche liegt vorteilhafterweise in einem Bereich von 0,01 bis 5 µm, wobei insbesondere die Schichtdicke der Gleitschicht größer als die Rauhigkeit der Hartmetalloberfläche ist. Rₐ im Sinne der Erfindung ist die mittlere Rauhigkeit und gibt den mittleren Abstand eines Messpunktes auf der Oberfläche zur Mittellinie an. Die Mittellinie schneidet innerhalb der Bezugsstrecke das tatsächliche Profil so, dass die Summe der betragsmäßigen Profilabweichungen bezogen auf die Mittellinie minimal wird. Rₐ kann gemäß der Vorschrift DIN EN ISO 4287 ermittelt werden.

Der Ausdehnungskoeffizient des Hartmetalls liegt vorteilhafterweise in einem Bereich von 3 bis 9 x 10⁻⁶/K bei 20°C und kann vorteilhafterweise durch die entsprechende Mischung der verschiedenen Materialien, aus denen das Hartmetall besteht, eingestellt werden. Da Wolframcarbid einen Ausdehnungskoeffizient von etwa 3,2 x 10⁻⁶/K bei 20°C aufweist aber Ti einen Ausdehnungskoeffizient von etwa 8,5 x 10⁻⁶/K bei 20°C, Kobalt einen Ausdehnungskoeffizient von etwa 12,3 x 10⁻⁶/K bei 20°C und Silber einen Ausdehnungskoeffizient von etwa 19,7 x 10⁻⁶/K bei 20°C aufweist, kann durch geeignete Kombination der verschiedenen Materialanteile der Wärmeausdehnungskoeffizient des Hartmetalls auf beispielsweise 6 x 10-⁶/K bei 20°C eingestellt werden.

In einer weiteren Ausführungsform wird die der Erfindung zugrundeliegende Aufgabe gelöst, durch ein Verfahren zur Herstellung eines erfindungsgemäßen Schichtaufbaus, das dadurch gekennzeichnet ist, dass man
a. eine Lotfolie auf das Substrat aufbringt und anschließend die Hartstoffschicht aufbringt, und
b. die Hartstoffschicht und das Substrat mit der Lotfolie verlötet, insbesondere im Vakuumofen oder über Hochfrequenz in Schutzgasatmosphäre.

Vorteilhafterweise wird die Hartstoffschicht dadurch auf die Lotfolie aufgebracht, dass die fertig verpresste Hartstoffschicht als Scheibe oder Platte auf die Lotfolie aufgelegt wird. Diese Scheibe der Hartstoffschicht liegt vorteilhafterweise als kaltgepresster Grünkörper, insbesondere aus einem der oben beschriebenen Materialien vor.

In einer weiteren Ausführungsform wird die der Erfindung zugrundeliegende Aufgabe gelöst durch ein Verfahren zur Herstellung eines erfindungsgemäßen Schichtaufbaus, das dadurch gekennzeichnet ist, dass man
a¹. ein Lotpulver mit pulverförmigen Hartstoffmaterial vermischt, die Mischung auf das Substrat aufträgt und anschließend die Mischung zur Hartstoffschicht verdichtet, bei gleichzeitiger Bildung der Lotschicht, und
b¹. das Hartstoffmaterial durch Pressen mit dem Lotpulver benetzt.

Dabei wird also das Hartstoffmaterial mit dem Lotpulver infiltriert.

In beiden erfindungsgemäßen Verfahrensvarianten stellt man in Abhängigkeit von der Schmelztemperatur die Temperatur vorteilhafterweise in einem Bereich von 600 bis 1000 °C ein.

Auch können beide erfindungsgemäßen Verfahrensvarianten so durchgeführt werden, dass vor dem Verpressen beziehungsweise Löten der Schichtaufbau mit einem Deckel versehen wird, dieser zugeschweißt wird und erst anschließend gelötet beziehungsweise verpresst wird. Diese Verfahrensschritte finden vorteilhafterweise immer unter erhöhter Temperatur statt.

Bei der Verdichtung der Pulvermischung wird diese vorteilhafterweise entweder isostatisch oder uniaxial gepresst. Dies kann vorzugsweise durch Heißpressen geschehen.

Vor der Durchführung des erfindungsgemäßen Verfahrens kann vorteilhafterweise die Substratoberfläche vorbehandelt werden. Dazu kann diese vorzugsweise geätzt werden. Dies geschieht unter anderem um die Oberfläche aufzurauen und so die Haftung mit dem Lot und im Endeffekt mit der Hartstoffschicht zu verbessern. Dieser Zusammenhang war überraschend aufgefunden worden, da in der bereits oben genannten DE 601 07 840 T2 für eine besonders gute Haftung das Substrat zunächst geschliffen wurde.

In einer weiteren Ausführungsform wird die der Erfindung zugrundeliegende Aufgabe gelöst durch die Verwendung eines erfindungsgemäßen Schichtaufbaus als Lagermaterial, insbesondere für Gleitlager, Pleuellager, Wälzlager oder Kugellager. Der erfindungsgemäße Schichtaufbau wird vorzugsweise im Motoren- und Turbinenbau für insbesondere hochfeste und Verschleiß ausgesetzte Bauteile eingesetzt.

### Ausführungsbeispiele:

### Beispiel 1 (Bezugsbeispiel):

An einem Tassenstößel wurde eine etwa 1 mm tiefe Eindrehung in einen Titanzylinder gedreht. In diese Vertiefung wurde nun entweder das Pulvergemisch, eine Scheibe oder ein vorgefertigter Grünkörper verschlossen und anschließend heißisostatisch gepresst oder im Vakuum gelötet. Bei der Endbearbeitung wurde die Lauffläche freigelegt, und das Bauteil auf Maß gefertigt.

### Beispiel 2:

In die Eindrehung eines Ti-Grundkörpers wurde eine Silberlotfolie mit einer Dicke von etwa 0,1 mm gelegt. Die darüber liegende kalt aus den jeweiligen Metallpulvern verpresste Hartmetallscheibe bestand aus einer Mischung aus WC (75 Gew.%), Co (13 Gew.%) und Ni (12 Gew%). Die Hartmetallscheibe besaß eine Stärke von 0,5 mm. In einem Vakuumofen und einer Schutzgasglocke wurde die Hartmetallscheibe bei einer Temperatur von 750 °C hartgelötet. Die Oberfläche des Hartmetalls wurde durch Ätzen nun mit einer definierten Rauhigkeit Rₐ von 2 µm und anschließend mit einer Gleitschicht aus DLC mit einer Schichtdicke von 3 µm mit Hilfe von Kathodenzerstäubung versehen.

### Beispiel 3:

In die Eindrehung eines Ti-Grundkörpers wurde eine Silberlotfolie mit einer Dicke von etwa 0,1 mm gelegt. Darüber wurde ein kaltgepresster Grünkörper aus WC, Co und Ag mit einer Stärke von 1 mm eingelegt. Der Hauptbestandteil bestand aus 80 Gew.% WC, 13 Gew.% Silberlotpulver und 7 Gew.% Kobaltpulver. Hierbei konnte über die Aufbereitung (Mischen und Kaltverpressen der Körner zu einem losen Grünkörper) des Pulvergemisches der Ausdehnungskoeffizienten zusätzlich auf etwa 6 x 10⁻⁶/K bei 20°C eingestellt werden, um die Haftung der Gleit- und Verschleißschicht zu optimieren.

Das Bauteil wurde mit einem Ti-Deckel verschlossen und anschließend mit einem Laser im Vakuum verschweißt. Danach wurde das Teil in Abhängigkeit der Schmelztemperatur des Silberlots bei 680 °C heißisostatisch gepresst, wobei das Ag durch Kapillarwirkung das gesamte Pulver benetzte. Nach dem Pressvorgang wurde der Ti-Deckel abgearbeitet, die Hartmetalloberfläche durch Ätzen mit einer definierten Oberflächengüte Rₐ von etwa 2 µm, und schließlich mit einer zusätzlichen Gleitschicht aus DLC mit einer Schichtdicke von 3 µm mit Hilfe von Kathodenzerstäubung versehen.

## Patentansprüche

1. Schichtaufbau umfassend ein Substrat mit einer wenigstens einseitig darauf befindlichen Lotschicht und auf der Lotschicht befindlichen Hartstoffschicht, **dadurch gekennzeichnet, dass** die Lotschicht eine Schichtdicke in einem Bereich von 0,5 bis 500 µm aufweist.

2. Schichtaufbau nach Anspruch 1, **dadurch gekennzeichnet, dass** die Lotschicht überwiegend ein Element ausgewählt aus der Gruppe der Elemente Kupfer, Silber oder Aluminium oder ihren Mischungen sowie deren Legierungen enthält, insbesondere daraus besteht.

3. Schichtaufbau nach einem der Ansprüche 1 oder 2, **dadurch gekennzeichnet, dass** die Hartstoffschicht eine Schichtdicke in einem Bereich von 0,1 bis 1 mm aufweist.

4. Schichtaufbau nach einem der Ansprüche 1 bis 3, **dadurch gekennzeichnet, dass** die Hartstoffschicht überwiegend Hartmetall enthält, insbesondere aus Hartmetall besteht.

5. Schichtaufbau nach einem der Ansprüche 1 bis 4, **dadurch gekennzeichnet, dass** die Hartstoffschicht Wolframcarbid, insbesondere Wolframcarbid in einer Menge von 70 bis 95 Gewichtsprozent enthält.

6. Schichtaufbau nach einem der Ansprüche 1 bis 5, **dadurch gekennzeichnet, dass** dieser zusätzlich auf der Hartstoffschicht eine Gleitschicht umfasst, insbesondere einer Schichtdicke im Bereich von 0,5 bis 100 µm.

7. Schichtaufbau nach einem der Ansprüche 1 bis 6, **dadurch gekennzeichnet, dass** die Gleitschicht überwiegend ein Material ausgewählt aus der Gruppe CrN, TiB₂, MoS₂, TiBN, deren Mischungen sowie deren Mischungen mit DLC enthält, insbesondere daraus besteht.

8. Verfahren zur Herstellung eines Schichtaufbaus nach einem der Ansprüche 1 bis 7, **dadurch gekennzeichnet, dass** man
a. eine Lotfolie auf das Substrat aufbringt und anschließend die Hartstoffschicht aufbringt, und
b. die Hartstoffschicht und das Substrat mit der Lotfolie verlötet, insbesondere im Vakuumofen oder über Hochfrequenz in Schutzgasatmosphäre.

9. Verfahren zur Herstellung eines Schichtaufbaus nach einem der Ansprüche 1 bis 7, **dadurch gekennzeichnet, dass** man
a¹. ein Lotpulver mit pulverförmigen Hartstoffmaterial vermischt, die Mischung auf das Substrat aufträgt und anschließend die Mischung zur Hartstoffschicht verdichtet, bei gleichzeitiger Bildung der Lotschicht und
b¹ das Hartstoffmaterial durch Pressen mit dem Lotpulver benetzt.

10. Verfahren nach Anspruch 8 oder 9, **dadurch gekennzeichnet, dass** man eine Temperatur im Bereich von 600°C bis 1000 °C einstellt.

11. Verwendung eines Schichtaufbaus nach einem der Ansprüche 1 bis 7 als Lagermaterial, insbesondere für Gleitlager, Pleuellager, Wälzlager oder Kugellager.
